# EUROPÄISCHE PATENTSCHRIFT

(11) **EP 3 057 841 B1**
(45) Veröffentlichungstag und Bekanntmachung des Hinweises auf die Patenterteilung: **13.02.2019**
(21) Anmeldenummer: 14783871.8
(22) Anmeldetag: 14.10.2014
(51) Int. Cl.: B60W 50/08, B60W 50/16, B60W 30/12, B60W 30/16, B60K 26/02, B60W 50/00, G05G 1/30

(54) **VERFAHREN ZUM FÜHREN EINES KRAFTFAHRZEUGS UND KRAFTFAHRZEUG ZUM AUSFÜHREN DES VERFAHRENS**
METHOD FOR OPERATING A MOTOR VEHICLE AND MOTOR VEHICLE FOR CARRYING OUT THE METHOD
PROCÉDÉ PERMETTANT DE GUIDER UN VÉHICULE AUTOMOBILE ET VÉHICULE AUTOMOBILE PERMETTANT DE METTRE EN UVRE LE PROCÉDÉ

(30) Priorität: 15.10.2013 DE 102013220905
(43) Veröffentlichungstag der Anmeldung: 24.08.2016
(73) Patentinhaber: Continental Automotive GmbH, 30165 Hannover (DE)
(72) Erfinder: SCHNIEDERS, Heiko, 64850 Schaafheim (DE); DITTMANN, Harald, 64832 Babenhausen (DE)
(86) Internationale Anmeldenummer: PCT/EP2014/071961
(87) Internationale Veröffentlichungsnummer: WO 2015/055615

(56) Entgegenhaltungen:
- DE-A1-102007 035 424
- DE-A1-102009 041 361
- DE-A1-102012 101 686
- "ADAPTIVE CRUISE CONTROL - AUTOMATIC BRAKING HANDOVER", RESEARCH DISCLOSURE, MASON PUBLICATIONS, HAMPSHIRE, GB, Nr. 421, 1. Mai 1999 (1999-05-01), Seite 632, XP000888704, ISSN: 0374-4353

## Beschreibung

Die Erfindung bezieht sich auf ein Verfahren zum Führen eines Kraftfahrzeugs, wobei in einem ersten Verfahrensabschnitt das Kraftfahrzeug mittels eines Fahrerassistenzsystems automatisiert geführt wird und wobei in einem daran anschließenden zweiten Verfahrensabschnitt das Kraftfahrzeug von einem Fahrer nicht-automatisiert geführt wird. Außerdem bezieht sich die Erfindung auf ein Kraftfahrzeug zum Ausführen eines solchen Verfahrens.

Es sind bereits verschiedene Verfahren zum automatisierten Führen von mit einem Fahrer besetzten Kraftfahrzeugen bekannt. Die Verfahren werden nach ihrem Automatisierungsgrad unterschieden, wobei eine Abgrenzung der Verfahren je nach Automatisierungsgrad beispielsweise von der Bundesanstalt für Straßenwesen, Bundesrepublik Deutschland, angegeben wird, welche Abgrenzung auch in vorliegender Patentanmeldung verwendet wird.

Danach übernimmt bei einem Verfahren zum hochautomatisierten Führen eines Kraftfahrzeugs ein Fahrerassistenzsystem die Quer- und Längsführung des Kraftfahrzeugs für einen gewissen Zeitraum in spezifischen Situationen. Bei einem Verfahren zum vollautomatisierten Führen eines Kraftfahrzeugs übernimmt ein Fahrerassistenzsystem die Quer- und Längsführung des Kraftfahrzeugs vollständig in einem definierten Anwendungsfall. Im Falle des vollautomatisierten Führens fordert das Fahrerassistenzsystem vor dem Verlassen des Anwendungsfalles den Fahrer mit ausreichender Zeitreserve zur Übernahme der Fahraufgabe, also des Führens des Kraftfahrzeugs, auf. Im Falle des hochautomatisierten Führens erfolgt die Übernahmeaufforderung bei Bedarf und mit ausreichender Zeitreserve. Zur Übernahme der Fahraufgabe muss der Fahrer in beiden Fällen, das heißt sowohl beim hochautomatisierten Führen als auch beim vollautomatisierten Führen des Kraftfahrzeugs mittels des Fahrerassistenzsystems, jeweils übernahmebereit sein. Das hoch- oder vollautomatisierte Führen des Kraftfahrzeugs wird auch als Führen des Kraftfahrzeugs mit einer höheren Automatisierungsstufe bezeichnet.

In beiden vorgenannten Fällen, dem hochautomatisierten Führen und dem vollautomatisierten Führen des Kraftfahrzeugs, muss der Fahrer das Fahrerassistenzsystem nicht überwachen.

Im Gegensatz dazu muss der Fahrer bei Verfahren mit einem niedrigeren Automatisierungsgrad, nämlich einem Verfahren zum teilautomatisierten Führen des Kraftfahrzeugs mittels eines Fahrerassistenzsystems oder einem Verfahren zum nur assistierten Führen des Kraftfahrzeugs mittels eines Fahrerassistenzsystems, das Fahrerassistenzsystem dauerhaft überwachen. Sowohl beim teilautomatisierten Führen des Kraftfahrzeugs mittels des Fahrerassistenzsystems als auch beim nur assistierten Führen eines Kraftfahrzeugs mittels des Fahrerassistenzsystems muss der Fahrer jederzeit zur vollständigen Übernahme der Fahrzeugführung bereit sein.

Bei einem Verfahren zum teilautomatisierten Führen des Kraftfahrzeugs mittels des Fahrerassistenzsystems übernimmt das Fahrerassistenzsystem die Quer- und Längsführung des Kraftfahrzeugs für einen gewissen Zeitraum oder in spezifischen Situationen. Bei einem Verfahren zum assistierten Führen des Kraftfahrzeugs mittels des Fahrerassistenzsystems führt der Fahrer dauerhaft entweder die Quer- oder Längsregelung aus; die jeweils andere Fahraufgabe wird in gewissen Grenzen von dem Fahrerassistenzsystem ausgeführt.

Insbesondere wenn das Kraftfahrzeug mittels eines Fahrerassistenzsystems automatisiert längsgeführt wird, besteht bei einem Übergang zu einem nicht-automatisiert längsgeführten Führen des Kraftfahrzeugs die Gefahr einer unerwünschten Geschwindigkeitsänderung des Kraftfahrzeugs.

Aus DE 10 2012 101 686 A1 ist ein Verfahren für ein Fahrerassistenzsystem zu einer autonomen Längs- und/oder Querregelung eines Fahrzeugs bekannt, und es wird ein Wechsel zwischen manuellem und automatischem Fahren und zurück beschrieben. Der Aufsatz "Adaptive Cruise Control - Automatic Braking Handover", Research Disclosure, Mason Publications, Hampshire, GB, Nr. 421, 1. Mai 1999, Seite 632 betrifft ein automatisches Bremsen. Ferner offenbart DE 10 2007 035 424 A1 ein verstellbares Gaspedal.

Aufgabe der Erfindung ist es, ein Verfahren der eingangs genannten Art anzugeben, welches Verfahren einen flüssigen Übergang vom automatisierten zum nicht-automatisierten Führen des Kraftfahrzeugs bietet. Außerdem ist es Aufgabe der Erfindung, ein Kraftfahrzeug zum Ausführen eines solchen Verfahrens zu schaffen.

Die erstgenannte Aufgabe wird mit einem Verfahren der eingangs genannten Art und erfindungsgemäß dadurch gelöst, dass beim Übergang des ersten Verfahrensabschnitts zum zweiten Verfahrensabschnitt ein Fahrpedal des Kraftfahrzeugs mittels eines Pedalaktors derart verstellt wird, dass das Fahrpedal zu Beginn des zweiten Verfahrensabschnitts eine der Fahrzeugbewegung des Kraftfahrzeugs am Ende des ersten Verfahrensabschnitts entsprechende Übergabepedalstellung einnimmt. Der zweite Verfahrensabschnitt des erfindungsgemäßen Verfahrens schließt sich vorzugsweise unmittelbar an den ersten Verfahrensabschnitt an.

Die Erfindung betrifft somit ein Verfahren, bei dem in dem ersten Verfahrensabschnitt das Kraftfahrzeug automatisiert zumindest längsgeführt wird. Die Erfindung umfasst auch ein Verfahren, bei dem das Kraftfahrzeug in dem ersten Verfahrensabschnitt nur assistiert mittels des Fahrerassistenzsystems in gewissen Grenzen zumindest längsgeführt wird. Bevorzugt betrifft die Erfindung ein Verfahren, bei dem in dem ersten Verfahrensabschnitt das Kraftfahrzeug vollautomatisiert oder hochautomatisiert oder teilautomatisiert geführt wird.

In dem zweiten Verfahrensabschnitt wird das Kraftfahrzeug von dem Fahrer nicht-automatisiert zumindest längsgeführt. Im Folgenden bezeichnet das automatisierte Führen des Kraftfahrzeugs grundsätzlich zumindest das automatisierte Längsführen des Kraftfahrzeugs, und das nicht-automatisierte Führen des Kraftfahrzeugs bezeichnet grundsätzlich zumindest das nicht-automatisierte Längsführen des Kraftfahrzeugs.

Von besonderem Vorteil ist bei der Erfindung, dass der Fahrer das Fahrpedal genau in der Stellung übernimmt, die das Fahrpedal einnehmen würde, wenn das Kraftfahrzeug bereits im ersten Verfahrensabschnitt von dem Fahrer nicht-automatisiert, das heißt ohne Einfluss eines das Kraftfahrzeug längsführenden Fahrerassistenzsystems, geführt worden wäre. Eine andere gebräuchliche Bezeichnung für das Fahrpedal ist Gaspedal. Der Pedalaktor dient dem Verstellen des Fahrpedals unabhängig vom Fahrer. Eine andere gebräuchliche Bezeichnung für den Pedalaktor ist Pedalaktuator.

Die Übergabepedalstellung entspricht der Fahrzeugbewegung, insbesondere der Fahrzeuglängsbewegung, des Kraftfahrzeugs am Ende des ersten Verfahrensabschnitts. Die Übergabepedalstellung ist somit abhängig zum Beispiel von einer Geschwindigkeit des Kraftfahrzeugs, von einem Getriebegang eines Antriebsgetriebes des Kraftfahrzeugs, von einer Streckensteigung, die das Kraftfahrzeug befährt, und von einer Fahrbahnbeschaffenheit eines Fahrwegs, den das Kraftfahrzeug befährt, und zwar jeweils zum Zeitpunkt am Ende des ersten Verfahrensabschnitts. Anders bezeichnet korrespondiert die Übergabepedalstellung mit dem Lastfall des Fahrzeugantriebsmotors des Kraftfahrzeugs zum Zeitpunkt am Ende des ersten Verfahrensabschnitts. Die Übergabepedalstellung des Fahrpedals ist die Stellung des Fahrpedals, die das Fahrpedal zu einem Zeitpunkt am Ende des ersten Verfahrensabschnitts einnehmen würde, wenn das Kraftfahrzeug nicht-automatisiert längsgeführt würde, das heißt wenn das Fahrpedal zu diesem Zeitpunkt bei gleicher Fahrzeugbewegung vom Fahrer betätigt würde.

Dadurch kann der Fahrer vorteilhaft direkt die von dem Pedalaktor eingestellte Pedalstellung, nämlich die Übergabepedalstellung, übernehmen, um das Kraftfahrzeug fortan - im zweiten Verfahrensabschnitt - nicht-automatisiert zu führen. Es erfolgt mit der Erfindung weder eine unerwünschte Verlangsamung des Kraftfahrzeugs noch eine unerwünschte Beschleunigung des Kraftfahrzeugs bei Übernahme des nicht-automatisierten, also manuellen, Fahrzeugführens durch den Fahrer. Ebenso wird ein unerwünschtes Ruckeln des Kraftfahrzeugs bei dieser Übernahme vermieden. Der Fahrer kann mit dem erfindungsgemäßen Verfahren die Position des Fahrpedals vorteilhaft schnell und komfortabel ohne Geschwindigkeitsänderung übernehmen. Es gibt vorteilhaft keinen sogenannten Overdrive (positive Beschleunigung) und auch keine negative Beschleunigung (Schleppmoment).

Eine Verstellung des Fahrpedals mittels des Pedalaktors erfolgt vorzugsweise ausschließlich dann, wenn das Kraftfahrzeug mittels des Fahrerassistenzsystems automatisiert geführt wird. Die Verstellung des Fahrpedals mittels des Pedalaktors ist vorzugsweise eine elektromotorische Verstellung. Wird das Kraftfahrzeug von dem Fahrer nicht-automatisiert geführt, erfolgt vorzugsweise keine Verstellung des Fahrpedals mittels des Pedalaktors. Der Pedalaktor ist vorzugsweise inaktiv, wenn das Kraftfahrzeug von dem Fahrer nicht-automatisiert geführt wird.

Zusätzliche vorteilhafte Weiterbildungen der Erfindung sind in den Unteransprüchen angegeben.

Man könnte sich vorstellen, dass das Fahrpedal während des gesamten ersten Verfahrensabschnitts von dem Pedalaktor zum Beispiel derart verstellt wird, dass die Stellung des Fahrpedals jeweils mit einer aktuellen tatsächlichen Fahrzeugbewegung korrespondiert. Von besonderem Vorteil ist es hingegen, wenn gemäß einer Weiterbildung der Erfindung der erste Verfahrensabschnitt eine mit dem Beginn des zweiten Verfahrensabschnitts endende Übergabephase umfasst und wenn das Fahrpedal während der Übergabephase mittels des Pedalaktors aus einer Pedalruheposition in die Übergabepedalstellung verstellt wird. Somit befindet sich das Fahrpedal während des ersten Verfahrensabschnitts, in dem das Kraftfahrzeug automatisiert geführt wird, hauptsächlich in der Ruheposition, so dass zum einen im Fußraum des Kraftfahrzeugs zusätzlicher Raum freigegeben ist und eine unbeabsichtigte Betätigung des Fahrpedals durch den Fahrer vorbeugend vermieden wird und zum anderen auch eine fortwährende, Fahrzeuginsassen des Kraftfahrzeugs gegebenenfalls störende und den Pedalaktor belastende Bewegung des Fahrpedals vermieden wird.

Die Übergabephase ist eine Phase während des Verfahrens, in welcher das nicht-automatisierte Führen des Kraftfahrzeugs vorbereitet wird. Die Übergabephase kann eine Zeitspanne von beispielsweise einigen Sekunden, zum Beispiel fünf bis zehn Sekunden, umfassen.

Gemäß einer vorteilhaften Weiterbildung der Erfindung wird während der Übergabephase das Fahrpedal mittels des Pedalaktors kontinuierlich entsprechend der Fahrzeugbewegung, insbesondere Fahrzeuglängsbewegung, des Kraftfahrzeugs verstellt. Wie oben beschrieben, hängt die Fahrzeugbewegung von verschiedenen Einflussfaktoren ab; anders bezeichnet korrespondiert die Stellung des Fahrpedals während der Übergabephase nach dieser Weiterbildung der Erfindung mit dem jeweiligen Lastfall des Fahrzeugantriebsmotors des Kraftfahrzeugs. Durch das Korrespondieren der Stellung des Fahrpedals mit der Fahrzeugbewegung beziehungsweise mit dem jeweiligen Lastfall des Fahrzeugantriebsmotors während der Übergabephase kann ein das Fahrpedal beim späteren nicht-automatisierten Führen des Kraftfahrzeugs betätigender Fuß des Fahrers bereits in der Übergabephase an das Fahrpedal angelegt werden und dabei vorteilhaft die Fahrpedalbewegung aufnehmen. Die jeweilige Stellung des Fahrpedals während der Übergabephase ist bei dieser Weiterbildung der Erfindung also jeweils die Stellung des Fahrpedals, die das Fahrpedal im Verlauf der Übergabephase einnehmen würde, wenn das Kraftfahrzeug nicht-automatisiert längsgeführt würde, das heißt wenn das Fahrpedal während der Übergabephase bei gleicher Fahrzeugbewegung vom Fahrer betätigt würde.

Es ist denkbar, dass das nicht-automatisierte Führen des Kraftfahrzeugs zum Beispiel durch Betätigen eines Schalters an einem Lenkrad des Kraftfahrzeugs durch den Fahrer eingeschaltet und das automatisierte Führen des Kraftfahrzeugs damit ausgeschaltet wird. Einer vorteilhaften Weiterbildung der Erfindung gemäß schaltet hingegen bei pedaldruckfreiem Fahrpedal ein auf das Fahrpedal ausgeübter Pedaldruck das nicht-automatisierte Führen des Kraftfahrzeugs ein. Gleichzeitig wird das automatisierte Führen des Kraftfahrzeugs ausgeschaltet. Ein pedaldruckfreies Fahrpedal im vorgenannten Sinn liegt dann vor, wenn kein externer Druck auf das Fahrpedal ausgeübt wird. Der das Schalten bewirkende Pedaldruck, der auf das Fahrpedal ausgeübt wird, wird vorzugsweise von dem Fahrer, und zwar insbesondere von einem Fuß des Fahrers, auf das Fahrpedal ausgeübt. Alternativ kann vorgesehen sein, dass ein kurzer, stoßartiger Pedaldruck, der auf das Fahrpedal ausgeübt wird, das nicht-automatisierte Führen des Kraftfahrzeugs einschaltet; dabei ist es dann nicht zwingend erforderlich, dass das Fahrpedal vorher pedaldruckfrei ist.

Besonders vorteilhaft ist es, wenn gemäß einer anderen Weiterbildung der Erfindung am Beginn des zweiten Verfahrensabschnitts eine haptische Signalisierung durch das Fahrpedal an den Fahrer erfolgt. Die haptische Signalisierung gibt den erfolgten Übergang zum nicht-automatisierten Fahren an. Auf diese Weise erhält der Fahrer eine deutliche Information darüber, dass das Kraftfahrzeug nunmehr nicht-automatisiert von ihm, dem Fahrer selbst, also manuell, zu führen ist. Vorzugsweise kann die haptische Signalisierung ein Vibrieren des Fahrpedals umfassen.

Man könnte sich vorstellen, dass bei einem Übergang von einem nicht-automatisierten zu einem automatisierten Längsführen des Kraftfahrzeugs das Fahrpedal zum Beispiel in seiner letzten, vom Fahrer herbeigeführten Stellung verbleibt. Eine vorteilhafte Weiterbildung der Erfindung sieht hingegen vor, dass in einem dem ersten Verfahrensabschnitt vorausgehenden, vorzugsweise unmittelbar vorausgehenden, Verfahrensabschnitt das Kraftfahrzeug von dem Fahrer nicht-automatisiert geführt wird und dass das Fahrpedal zu Beginn des ersten Verfahrensabschnitts mittels des Pedalaktors in die Pedalruheposition verstellt wird. Dadurch wird von dem Fahrpedal kurzfristig zusätzlicher Raum im Fußraum des Kraftfahrzeugs freigegeben und im Folgenden zudem eine versehentliche Betätigung des Fahrpedals durch den Fahrer im Vorhinein bereits vermieden. Das Fahrpedal wird zu Beginn des ersten Verfahrensabschnitts aus einer der Fahrzeugbewegung entsprechenden Pedalstellung, welche noch der Fahrer bewirkt hatte, heraus verstellt. Wie oben beschrieben, hängt die Fahrzeugbewegung (und damit auch die Stellung des Fahrpedals) von verschiedenen Einflussfaktoren ab; anders bezeichnet korrespondiert hier die Stellung des Fahrpedals mit dem Lastfall des Fahrzeugantriebsmotors des Kraftfahrzeugs zu Beginn des ersten Verfahrensabschnitts. Die der Fahrzeugbewegung entsprechende Pedalstellung zu Beginn des ersten Verfahrensabschnitts ist die Stellung des Fahrpedals, die das Fahrpedal zu diesem Zeitpunkt aufgrund Betätigung des Fahrpedals durch den Fahrer beim nicht-automatisierten Führen des Kraftfahrzeugs bei gleicher Fahrzeugbewegung einnehmen würde; hier kann die Pedalstellung insbesondere die von dem Fahrer bewirkte Pedalstellung am Ende des vorausgehenden Verfahrensabschnitts sein.

Die oben zweitgenannte Aufgabe wird gelöst mit einem Kraftfahrzeug zum Ausführen eines vorgenannten Verfahrens, wobei das Kraftfahrzeug ein Fahrerassistenzsystem zu einem automatisierten Führen des Kraftfahrzeugs und ein Fahrpedal mit einem Pedalaktor und mit einem Aktorsteuergerät zum Ansteuern des Pedalaktors aufweist, wobei das Fahrpedal mittels des von dem Aktorsteuergerät angesteuerten Pedalaktors unabhängig von einem Fahrer des Kraftfahrzeugs verstellbar ist. Dabei bedeutet unabhängig von dem Fahrer, dass der Fahrer das Fahrpedal nicht betätigt, das heißt keinen Druck auf das Fahrpedal ausübt. Das Aktorsteuergerät kann beispielsweise auch in einem zentralen Steuergerät des Kraftfahrzeugs, zum Beispiel in einem Steuergerät des Fahrerassistenzsystems, angeordnet sein. Insbesondere kann das Aktorsteuergerät auch in ein solches vorgenanntes Steuergerät funktional integriert sein. Der Pedalaktor wird von dem Aktorsteuergerät zum Beispiel in Abhängigkeit von der Fahrzeugbewegung, insbesondere Fahrzeuglängsbewegung, des Kraftfahrzeugs oder, anders bezeichnet, abhängig von dem Lastfall des Antriebsmotors des Kraftfahrzeugs angesteuert. Außerdem kann der Pedalaktor von dem Aktorsteuergerät beispielsweise auch abhängig von dem jeweiligen Verfahrensabschnitt eines vorgenannten erfindungsgemäßen Verfahrens angesteuert werden, zum Beispiel um das Fahrpedal in die Pedalruheposition zu verstellen.

Der Pedalaktor kann zum Beispiel ein hydraulischer Aktor oder beispielsweise ein pneumatischer Aktor sein. Für eine besonders gute und einfache Steuer- und Regelbarkeit des Pedalaktors sowie dessen kostengünstige Herstellbarkeit ist gemäß einer vorteilhaften Weiterbildung hingegen vorgesehen, dass der Pedalaktor ein elektromotorischer Aktor ist. Der Pedalaktor weist dann einen Elektromotor auf. Der Elektromotor wird insbesondere von dem Aktorsteuergerät angesteuert, und das Fahrpedal ist mittels des von dem Aktorsteuergerät angesteuerten Elektromotors des Pedalaktors verstellbar.

Ausführungsbeispiele der Erfindung sind anhand der Zeichnung schematisiert dargestellt und werden im Folgenden näher beschrieben. Es zeigen skizzenhaft
- Figur 1: ein Kraftfahrzeug und
- Figuren 2 bis 8: jeweils ein Fahrpedal des Kraftfahrzeugs nach Figur 1 in unterschiedlichen Pedalstellungen.

Sich jeweils entsprechende Elemente sind in allen Figuren mit gleichen Bezugszeichen versehen.

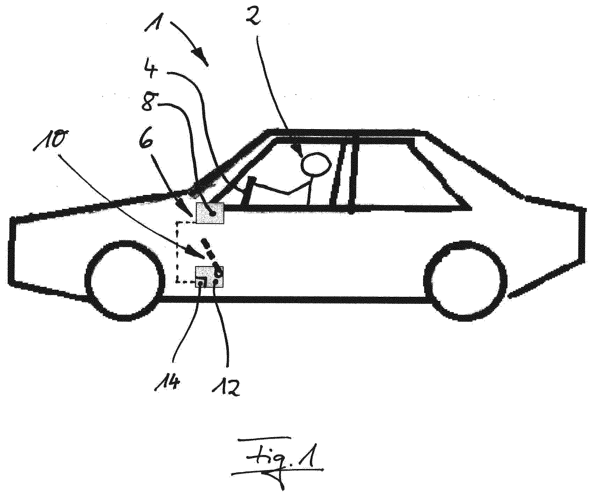

Figur 1 zeigt in skizzenhafter Darstellung ein Kraftfahrzeug 1 mit einem Fahrer 2. Das Kraftfahrzeug 1 weist ein Lenkrad 4 sowie ein Fahrerassistenzsystem 6, welches ein Steuergerät 8 umfasst, zu einem automatisierten Führen des Kraftfahrzeugs 1 auf.

Weiterhin weist das Kraftfahrzeug 1 ein Fahrpedal 10 mit einem Pedalaktor 12 und mit einem Aktorsteuergerät 14 auf.

Das Aktorsteuergerät 14 kann beispielsweise in den Pedalaktor 12 integriert sein oder zum Beispiel in ein anderes Steuergerät des Kraftfahrzeugs 1, zum Beispiel in das Steuergerät 8 des Fahrerassistenzsystems 6, integriert sein. Hier ist das Aktorsteuergerät 14 in dem Pedalaktor 12 angeordnet und mit dem Steuergerät 8 des Fahrerassistenzsystems 6 verbunden, so dass zwischen den beiden Steuergeräten Informationen, zum Beispiel Steuersignale, ausgetauscht werden können.

Das Fahrpedal 10 ist mittels des von dem Aktorsteuergerät 14 ansteuerbaren Pedalaktors 12 unabhängig von dem Fahrer 2 des Kraftfahrzeugs 1 verstellbar. In diesem Ausführungsbeispiel ist der Pedalaktor 12 ein elektromotorischer Aktor. Das Fahrpedal 10 wird mittels eines nicht weiter dargestellten Elektromotors verstellt, wenn das Kraftfahrzeug 1 automatisiert geführt wird. Eine Verstellung des Fahrpedals 10 mittels des Pedalaktors 12 erfolgt zumindest in eine Übergabepedalstellung zur Übernahme eines Führens, insbesondere eines Längsführens, des Kraftfahrzeugs 1 durch den Fahrer 2.

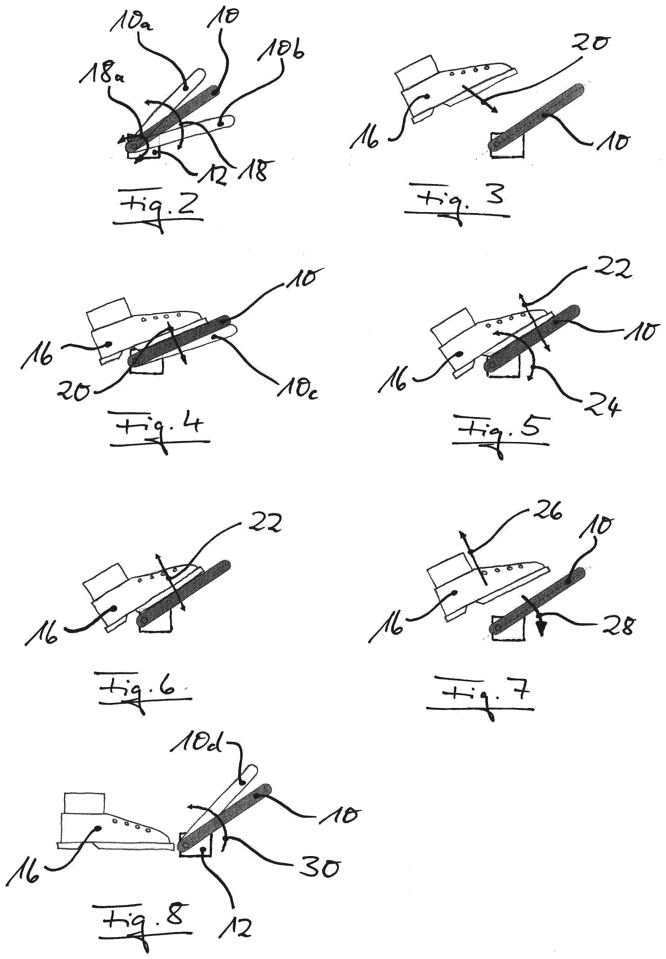

Anhand der Figuren 2 bis 8 wird ein Verfahren zum Führen des Kraftfahrzeugs 1 nach Figur 1 im Folgenden näher beschrieben. Dazu sind in den Figuren 3 bis 8 jeweils ein Fuß 16 des Fahrers 2 und das Fahrpedal 10 skizzenhaft in unterschiedlichen Positionen dargestellt.

Figur 2 zeigt das Fahrpedal 10, wenn das Kraftfahrzeug 1 während eines ersten Verfahrensabschnitts mittels des Fahrerassistenzsystems 6 automatisiert geführt wird. Das Fahrpedal 10 wird gemäß diesem Ausführungsbeispiel dann mittels des Pedalaktors 12 entsprechend einer momentanen Fahrzeuglängsbewegung des Kraftfahrzeugs 1 verstellt, was durch zwei Doppelpfeile 18, 18a verdeutlicht wird; das Fahrpedal 10 kann dabei sowohl höhere Stellungen, wie anhand eines in einer höheren Position beispielhaft eingezeichneten Fahrpedals 10a dargestellt, als auch niedrigere Stellungen, wie anhand eines in einer niedrigeren Position beispielhaft eingezeichneten Fahrpedals 10b dargestellt, einnehmen. Alternativ könnte sich das Fahrpedal 10 auch in einer Pedalruheposition befinden (vergleiche Figur 8).

Anschließend an den ersten Verfahrensabschnitt wird in einem zweiten Verfahrensabschnitt das Kraftfahrzeug 1 von dem Fahrer 2 nicht-automatisiert geführt. In Figur 3 ist eine Situation während einer Übergabephase am Ende des ersten Verfahrensabschnitts gezeigt, welche Übergabephase mit Beginn des zweiten Verfahrensabschnitts endet. Dabei bewegt der Fahrer 2 einen Fuß 16 in Richtung eines Pfeils 20 auf das Fahrpedal 10 zu.

Wie in Figur 4 gezeigt, setzt der Fahrer 2 nachfolgend den Fuß 16 auf das Fahrpedal 10 auf und übernimmt die letzte Stellung des Fahrpedals 10, welche dieses während des automatisierten Führens des Kraftfahrzeugs 1 eingenommen hat, die Übergabepedalstellung des Fahrpedals 10. Danach führt der Fahrer 2 das Kraftfahrzeug 1 nicht-automatisiert und drückt das Fahrpedal 10 zum Beispiel in Richtung eines Pfeils 20 in eine niedrigere Position nieder, wie anhand eines in einer niedrigeren Position eingezeichneten Fahrpedals 10c dargestellt.

Der Fahrer 2 führt das Kraftfahrzeug 1 dann manuell, das heißt nicht-automatisiert, und bewegt dazu den Fuß 16 auf oder ab, wie durch einen Doppelpfeil 22 in Figur 5 symbolisiert. Dementsprechend wird das Fahrpedal 10 von dem Fuß 16 in korrespondierender Richtung eines Doppelpfeils 24 bewegt. Eine Verstellung des Fahrpedals 10 mittels des Pedalaktors 12 erfolgt dabei nicht.

Eine der Figur 5 entsprechende Darstellung zeigt auch Figur 6, welche Figur 6 für eine Situation während eines dem ersten Verfahrensabschnitt vorausgehenden Verfahrensabschnitts steht, in welchem das Kraftfahrzeug 1 von dem Fahrer 2 ebenfalls nicht-automatisiert geführt wird. Zu Beginn des oben beschriebenen ersten Verfahrensabschnitts, in welchem das Kraftfahrzeug 1 mittels des Fahrerassistenzsystems 6 automatisiert geführt wird, nimmt der Fahrer 2 den Fuß 16 entsprechend der Darstellung in Figur 7 in Richtung eines Pfeils 26 von dem Fahrpedal 10. Das Fahrpedal 10 befindet sich dabei in einer der Fahrzeugbewegung, insbesondere der Fahrzeuglängsbewegung, des Kraftfahrzeugs 1 entsprechenden Pedalstellung und wird gemäß diesem Ausführungsbeispiel aus der vorgenannten Pedalstellung heraus mittels des Pedalaktors 12 in eine Pedalruheposition verstellt, was hier durch einen abwärts weisenden Pfeil 28 symbolisiert wird.

In Figur 8 ist das Fahrpedal 10 in einer Pedalruheposition gezeigt, der Fuß 16 des Fahrers 2 ruht in einem nicht weiter dargestellten Fußraum des Kraftfahrzeugs 1. Figur 8 zeigt eine Situation in einer mit Beginn des zweiten Verfahrensabschnitts endenden Übergabephase des ersten Verfahrensabschnitts, wie sie oben zu Figur 3 beschrieben ist.

Gemäß dem Ausführungsbeispiel nach Figur 8 wird das Fahrpedal 10 während der Übergabephase des ersten Verfahrensabschnitts mittels des Pedalaktors 12 aus der Pedalruheposition in eine Übergabepedalstellung, in welcher der Fahrer 2 das Fahrpedal zum nicht-automatisierten Führen des Kraftfahrzeugs 1 nahtlos übernehmen kann, in Richtung eines Pfeils 30 verstellt, wie anhand eines in einer höheren Position beispielhaft eingezeichneten Fahrpedals 10d dargestellt.

## Patentansprüche

1. Verfahren zum Führen eines Kraftfahrzeugs (1), wobei in einem ersten Verfahrensabschnitt das Kraftfahrzeug (1) mittels eines Fahrerassistenzsystems (6) automatisiert geführt wird und wobei in einem daran anschließenden zweiten Verfahrensabschnitt das Kraftfahrzeug (1) von einem Fahrer (2) nicht-automatisiert geführt wird, **dadurch gekennzeichnet, dass** beim Übergang des ersten Verfahrensabschnitts zum zweiten Verfahrensabschnitt ein Fahrpedal (10) des Kraftfahrzeugs (1) mittels eines Pedalaktors (12) derart verstellt wird, dass das Fahrpedal (10) zu Beginn des zweiten Verfahrensabschnitts eine der Fahrzeugbewegung des Kraftfahrzeugs (1) am Ende des ersten Verfahrensabschnitts entsprechende Übergabepedalstellung einnimmt.

2. Verfahren nach Anspruch 1, **dadurch gekennzeichnet, dass** der erste Verfahrensabschnitt eine mit dem Beginn des zweiten Verfahrensabschnitts endende Übergabephase umfasst und dass das Fahrpedal (10) während der Übergabephase mittels des Pedalaktors (12) aus einer Pedalruheposition in die Übergabepedalstellung verstellt wird.

3. Verfahren nach Anspruch 2, **dadurch gekennzeichnet, dass** während der Übergabephase das Fahrpedal (10) mittels des Pedalaktors (12) kontinuierlich entsprechend der Fahrzeugbewegung des Kraftfahrzeugs (1) verstellt wird.

4. Verfahren nach einem der vorhergehenden Ansprüche, **dadurch gekennzeichnet, dass** bei pedaldruckfreiem Fahrpedal (10) ein auf das Fahrpedal (10) ausgeübter Pedaldruck das nicht-automatisierte Führen des Kraftfahrzeugs (1) einschaltet.

5. Verfahren nach einem der vorhergehenden Ansprüche, **dadurch gekennzeichnet, dass** am Beginn des zweiten Verfahrensabschnitts eine haptische Signalisierung durch das Fahrpedal (10) an den Fahrer (2) erfolgt.

6. Verfahren nach einem der vorhergehenden Ansprüche, **dadurch gekennzeichne**t, dass in einem dem ersten Verfahrensabschnitt vorausgehenden Verfahrensabschnitt das Kraftfahrzeug (1) von dem Fahrer (2) nicht-automatisiert geführt wird und dass das Fahrpedal (10) zu Beginn des ersten Verfahrensabschnitts mittels des Pedalaktors (12) in die Pedalruheposition verstellt wird.

7. Kraftfahrzeug (1) zum Ausführen eines Verfahrens nach einem der vorhergehenden Ansprüche, wobei das Kraftfahrzeug (1) ein Fahrerassistenzsystem (6) zu einem automatisierten Führen des Kraftfahrzeugs (1) und ein Fahrpedal (10) mit einem Pedalaktor (12) und mit einem Aktorsteuergerät (14) zum Ansteuern des Pedalaktors (12) aufweist, wobei das Fahrpedal (10) mittels des von dem Aktorsteuergerät (14) angesteuerten Pedalaktors (12) unabhängig von einem Fahrer (2) des Kraftfahrzeugs (1) verstellbar ist.

8. Kraftfahrzeug nach Anspruch 7, **dadurch gekennzeichnet, dass** der Pedalaktor (12) ein elektromotorischer Aktor ist.

## Claims

1. Method for guiding a motor vehicle (1), wherein a first method section involves the motor vehicle (1) being guided in automated fashion by means of a driver assistance system (6) and wherein a subsequent second method section involves the motor vehicle (1) being guided in nonautomated fashion by a driver (2),
**characterized in that** the transition from the first method section to the second method section involves a gas pedal (10) of the motor vehicle (1) being adjusted by means of a pedal actuator (12) such that at the beginning of the second method section, the gas pedal (10) assumes a transfer pedal position that corresponds to the vehicle movement of the motor vehicle (1) at the end of the first method section.

2. Method according to Claim 1, **characterized in that** the first method section comprises a transfer phase that ends with the beginning of the second method section and **in that** during the transfer phase, the gas pedal (10) is adjusted from a pedal rest position to the transfer pedal position by means of the pedal actuator (12).

3. Method according to Claim 2, **characterized in that** during the transfer phase, the gas pedal (10) is adjusted continuously by means of the pedal actuator (12) in accordance with the vehicle movement of the motor vehicle (1) .

4. Method according to one of the preceding claims,
**characterized in that** when the gas pedal (10) is free of pedal pressure, a pedal pressure exerted on the gas pedal (10) switches on the nonautomated guidance of the motor vehicle (1).

5. Method according to one of the preceding claims,
**characterized in that** at the beginning of the second method section, there is haptic signaling by the gas pedal (10) to the driver (2).

6. Method according to one of the preceding claims,
**characterized in that** a method section that precedes the first method section involves the motor vehicle (1) being guided in nonautomated fashion by the driver (2) and **in that** the gas pedal (10) is adjusted to the pedal rest position by means of the pedal actuator (12) at the beginning of the first method section.

7. Motor vehicle (1) for carrying out a method according to one of the preceding claims, wherein the motor vehicle (1) has a driver assistance system (6) for automated guidance of the motor vehicle (1) and a gas pedal (10) having a pedal actuator (12) and having an actuator controller (14) for actuating the pedal actuator (12), wherein the gas pedal (10) can be adjusted by means of the pedal actuator (12), which is actuated by the actuator controller (14), independently of a driver (2) of the motor vehicle (1).

8. Motor vehicle according to Claim 7, **characterized in that** the pedal actuator (12) is an actuator driven by electric motor.

## Revendications

1. Procédé permettant de guider un véhicule automobile (1), dans lequel, au cours d'une première étape de procédé, le véhicule automobile (1) est guidé de manière automatique au moyen d'un système d'assistance au conducteur (6) et, au cours d'une deuxième étape de procédé lui succédant, le véhicule automobile (1) est guidé de manière non automatique par un conducteur (2),
**caractérisé en ce que**, lors de la transition de la première étape de procédé à la deuxième étape de procédé, une pédale d'accélérateur (10) du véhicule automobile (1) est déplacée au moyen d'un actionneur de pédale (12), de telle manière que la pédale d'accélérateur (10), au début de la deuxième étape de procédé, occupe une position de transition de la pédale correspondant au déplacement du véhicule automobile (1) à la fin de la première étape de procédé.

2. Procédé selon la revendication 1, **caractérisé en ce que** la première étape de procédé comprend une phase de transition qui se termine par le début de la deuxième étape de procédé, et **en ce que** la pédale d'accélérateur (10) est déplacée pendant la phase de transition au moyen de l'actionneur de pédale (12) d'une position de repos de la pédale à la position de transition de la pédale.

3. Procédé selon la revendication 2, **caractérisé en ce que**, pendant la phase de transition, la pédale d'accélérateur (10) est déplacée en continu au moyen de l'actionneur de pédale (12) d'une manière qui correspond au déplacement du véhicule automobile (1).

4. Procédé selon l'une des revendications précédentes,
**caractérisé en ce que**, lorsque la pédale d'accélérateur (10) n'est pas soumise à une pression de pédale, une pression de pédale exercée sur la pédale d'accélérateur (10) déclenche le guidage non automatique du véhicule automobile (1).

5. Procédé selon l'une des revendications précédentes,
**caractérisé en ce que**, au début de la deuxième étape de procédé, une signalisation haptique destinée au conducteur (2) est effectuée par l'intermédiaire de la pédale d'accélérateur (10).

6. Procédé selon l'une des revendications précédentes,
**caractérisé en ce que**, au cours d'une étape de procédé précédant la première étape de procédé, le véhicule automobile (1) est guidé de manière non automatique par le conducteur (2) et **en ce que** la pédale d'accélérateur (10) est déplacée en position de repos au moyen de l'actionneur de pédale (12) au début de la première étape de procédé.

7. Véhicule automobile (1) destiné à mettre en oeuvre un procédé selon l'une des revendications précédentes, dans lequel le véhicule automobile (1) comporte un système d'assistance au conducteur (6) permettant de guider de manière automatique le véhicule automobile (1) et une pédale d'accélérateur (10) munie d'un actionneur de pédale (12) et un appareil de commande d'actionneur (14) destiné à commander l'actionneur de pédale (12), dans lequel la pédale d'accélérateur (10) peut être déplacée indépendamment du conducteur (2) du véhicule automobile (1) au moyen de l'actionneur de pédale (12) commandé par l'appareil de commande d'actionneur (14).

8. Véhicule automobile selon la revendication 7,
**caractérisé en ce que** l'actionneur de pédale (12) est un actionneur à moteur électrique.
